# EUROPEAN PATENT SPECIFICATION

(11) **EP 3 084 145 B1**
(45) Date of publication and mention of the grant of the patent: **13.12.2017**
(21) Application number: 14833260.4
(22) Date of filing: 19.12.2014
(51) Int. Cl.: F01D 25/16, F01D 25/28, F02C 7/06, F16C 32/06

(54) **SUPPORTING EQUIPMENT FOR A SHAFT OF A ROTATING MACHINE, AND METHOD OF REPAIRING A ROTATING MACHINE USING SUCH A SUPPORTING EQUIPMENT**
STÜTZVORRICHTUNG FÜR EINE WELLE EINER ROTATIONSMASCHINE UND VERFAHREN ZUR REPARATUR EINER ROTATIONSMASCHINE MIT SOLCH EINER STÜTZVORRICHTUNG
ÉQUIPEMENT DE SOUTIEN POUR UN ARBRE D'UNE MACHINE ROTATIVE, ET PROCÉDÉ DE RÉPARATION D'UNE MACHINE ROTATIVE AU MOYEN D'UN TEL ÉQUIPEMENT DE SOUTIEN

(30) Priority: 20.12.2013 IT MI20132181
(43) Date of publication of application: 26.10.2016
(73) Proprietor: Ansaldo Energia S.p.A., 16152 Genova (IT)
(72) Inventor: SQUERI, Bruno, I-16133 Genova (IT)
(74) Representative: Bernotti, Andrea
(86) International application number: PCT/IB2014/067149
(87) International publication number: WO 2015/092764

(56) References cited:
- EP-A1- 0 404 020
- WO-A1-00/25035
- US-A- 3 751 119
- US-A- 5 374 129
- US-A1- 2009 311 089

## Description

### TECHNICAL FIELD

The present invention relates to an equipment for supporting a shaft of a rotating machine, in particular a rotating machine of a plant for producing electric power, and to a method of repairing a rotating machine using such a supporting equipment.

### BACKGROUND ART

As known, plants for producing electric power may comprise one or more rotating machines, which normally include a driving machine, in particular a gas turbine or a steam turbine, and an electric generator, e.g. an alternator.

The driving machine and the electric generator may be coupled to separate shafts or, more frequently, to a single shaft. In all cases, bearings which are coupled to respective shaft portions (generally named bearing coupling portions) must be provided to ensure appropriate support and friction levels during machine operation.

However, even if the bearings may be well designed and made, the weights involved, the rotation speeds and the almost uninterrupted operation over time may cause rubbing, local metal melting and, as a result, grooves on the bearing coupling portions of the shaft. Since even small mechanical imperfections are generally harmful for rotating machines, the bearing coupling portions need to be occasionally repaired by means of turning operations.

In order to perform the necessary work, the shaft needs to be extracted from the machine and sometimes arranged on special supports after having been transported to a specialized workshop. These special supports allow the shaft to be rotated at slow speeds, leaving the surface of the bearing coupling portions free.

However, disassembling the rotor of a rotating shaft of a plant for producing electric power is extremely complex, and normally requires very long downtimes. Therefore, the cost associated with the repair is high.

An example of a supporting equipment for a shaft of a rotating machine is disclosed in US 3 751 119 A. The supporting equipment comprises a frame and an insert. The insert is a ring portion, is connected to the frame and supports in rotary manner a shaft of a rotating machine. A hydraulic circuit of the insert feeds lubricating fluid and forms a hydrostatic bearing for the shaft housed in a supporting seat. Fastening elements fixing the frame to a casing of the rotating machine with the supporting seat coaxial with the shaft.

### DISCLOSURE OF INVENTION

It is thus the object of the present invention to provide a supporting equipment for a rotor of a rotating machine, and a method of repairing a rotating machine of a plant for producing electric power which allow to overcome, or at least attenuate, the limitations described, and in particular allow to repair the damaged bearing coupling portions without necessarily needing to extract the shaft from the machine.

According to the present invention, a supporting equipment for a rotor of a rotating machine is provided as set out in claim 1.

### BRIEF DESCRIPTION OF THE DRAWINGS

The present invention will now be described with reference to the accompanying drawings, which show some non-limitative embodiments thereof, in which:
- figure 1 is a top plan view, taken along a horizontal longitudinal plane, of a rotating machine of a plant for producing electric power incorporating a supporting equipment according to an embodiment of the present invention;
- figure 2 is a partially sectional, enlarged side view of a portion of the machine in figure 1, housing the supporting equipment;
- figure 3 is a front view, with parts removed for clarity, taken along the plotting plane III-III in figure 2, of a portion of the rotating machine and of the supporting equipment in figure 1;
- figure 4 is a partially exploded, top perspective view of the supporting equipment in figure 1;
- figure 5 is an enlarged side section view, taken along the plotting plane V-V in figure 3, of a detail of the rotating machine and of the supporting equipment in figure 1;
- figure 6 is a simplified block diagram of the supporting equipment in figure 1;
- figure 7 is a side view of a portion of a rotating machine of a plant for producing electric power incorporating a supporting equipment according to a different embodiment of the present invention; and
- figure 8 is a front view of the portion of rotating machine and of the supporting equipment in figure 7.

### BEST MODE FOR CARRYING OUT THE INVENTION

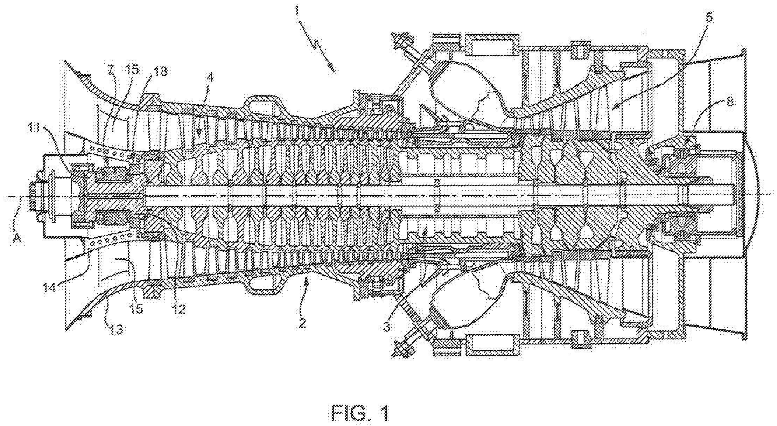

Figure 1 shows a gas turbine 1 of an plant for producing electric power as a whole.

Gas turbine 1 comprises a turbine casing 2 and a shaft 3, which extends along an axis A and has a compressor section 4 and an expansion or turbine section 5.

Shaft 3 is housed in the turbine casing 2 and is rotationally supported by a front bearing assembly 7, located close to the compression section 4, and a rear bearing assembly 8, located close to the turbine section 5. In particular, the bearing assembly 7 is coupled to a bearing coupling portion 10 of shaft 3, axially delimited by annular shoulders 11, 12 on the suction side and on the compressor side, respectively.

At a suction mouth of gas turbine 1, the turbine casing 2 comprises an outer casing 13 and a truncated cone shaped, inner casing 14, which is rigidly supported by the outer casing 13 through spokes 15 and houses the portion of shaft 3 in which the bearing coupling portion 10 and the bearing assembly 7 are defined.

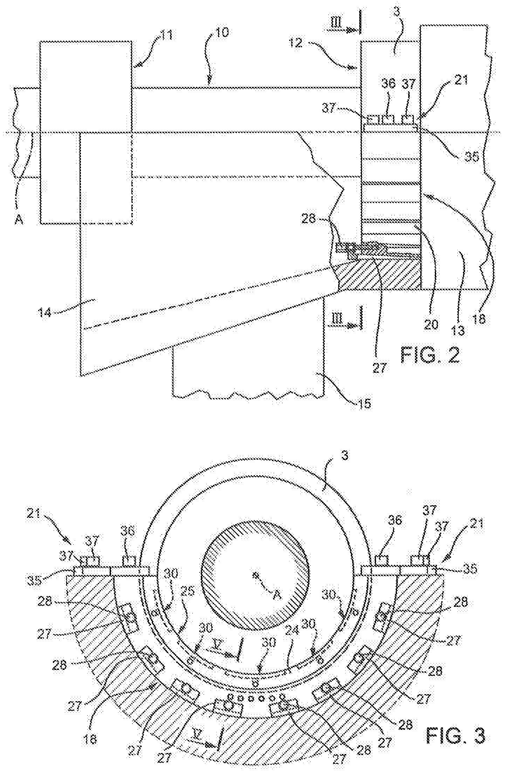

The inner casing comprises a lower half-shell and an upper half-shell, which is removed in the views in figures 2 and 3 (as the bearing assembly 7).

Figures 2-6 show a supporting equipment 18 in accordance with the present invention. The supporting equipment 18 is housed in the turbine casing 2 and rotationally supports shaft 3, as shown in figures 2 and 3. In particular, the supporting equipment 18 is housed in the lower half-shell of the inner casing 14 and supports shaft 3 in a region adjacent to, preferably immediately adjacent to, the bearing coupling portion 10. In an embodiment, the supporting equipment 18 supports the shoulder 12 of shaft 3, between the bearing coupling portion 10 and the compressor section 4.

The supporting equipment 18 comprises a frame 20, fastening elements 21 for connecting frame 3 to the turbine casing 3, and an insert 24 which defines a supporting seat 25 for shaft 3.

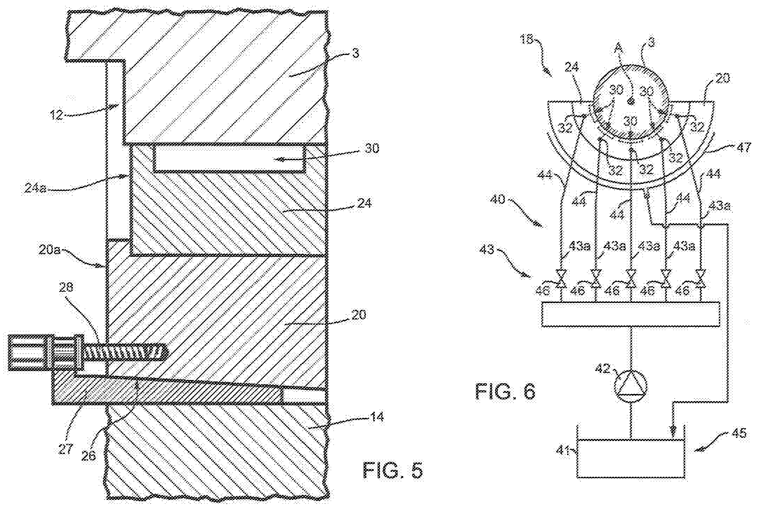

Frame 20 is shaped as a ring portion which extends along an arc of a circle corresponding to an angle of 180° or less, and rests against the lower half-shell of the turbine casing 2. On a radially outer surface (figure 5), frame 20 has a plurality of seats 26 for receiving respective centring wedges 27. The centring wedges 27 are also provided with adjusting screws 28 which engage respective holes on a face 20a of frame 20, as described in greater detail in the enlargement in figure 5.

Insert 24, which in one embodiment is made of aluminum alloy, is also shaped as a ring portion which extends along an arc of a circle and has opening equal to frame 20. Insert 24 is coaxially supported by frame 20. Moreover, frame 20 and insert 24 are coaxial in use with respect to shaft 3.

Tubs 30 arranged in sequence in the circumferential direction are obtained on a radially inner surface of insert 24, which defines the supporting seat 25. Tubs 30 are open on the radially inner surface of insert 24. In an embodiment, the area of tubs 30 differs as a function of the position along the radially inner surface of insert 24. For example, the area of the tubs 30 arranged at the ends of insert 24 is smaller than the area of the tubs 30 in more central positions.

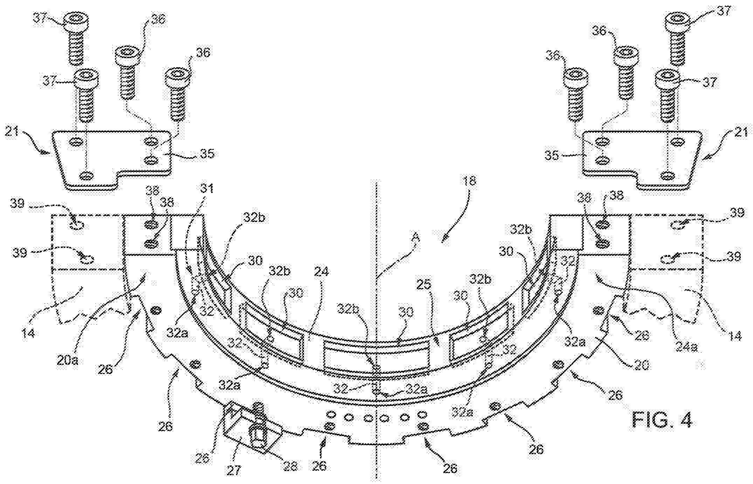

A hydraulic circuit 31, which comprises a plurality of independent pipes 32, is integrated in insert 24. Pipes 32 have respective separate inlets 32a on a face 24a of insert 24 perpendicular to the axis A of shaft 3 in use and respective feeding outlets 32b at the bottom of respective tubs 30 (see figure 4).

Figure 4 also shows the fastening elements 21, which comprise plates 35, at respective ends of frame 20, and screws 36, 37. Screws 36 are inserted through the respective plates 35 into holes 38 at the ends of frame 20. Screws 37 are inserted through the respective plates 35 into holes 39 for closing the upper half-shell of the turbine casing 2 onto the lower half-shell.

With reference to figure 6, the equipment 1 comprises a lubricant feeding device 40 for feeding a pressurized lubricant fluid to the tubs 30 of insert 24, which thus defines a hydraulic bearing for shaft 3.

The lubricant feeding device 40 comprises a tank 41, a pump 42 and a distributor 43, connected to the pipes 32 of the hydraulic circuit 31 and to the tubs 30 through pipes 44.

Pump 42 draws lubricant at atmospheric pressure from tank 41 and supplies a flow of lubricant at high pressure to tubs 30 through distributor 43, pipes 44 and hydraulic circuit 31. In an embodiment, pump 42 forms part of a lifting system 45 of the bearing assembly 7 and is connected to an inlet of distributor 43 by a quick connecting pipe (also not shown in detail).

Distributor 43 has a plurality of outlets 43a connected to respective pipes 32 of the hydraulic circuit 31, as mentioned. Furthermore, the distributor is provided with adjusting valves 46 to adjust the pressure of each outlet 43a in an independent manner.

Figure 6 also shows a collection tank 47, which collects the lubricant fluid leaked from the gap between insert 24 and shaft 3. The leaked lubricant fluid is returned to tank 41.

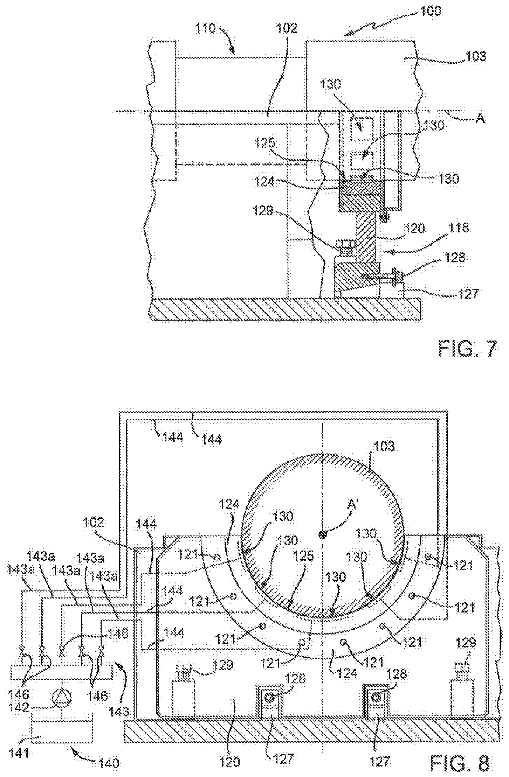

Figures 7 and 8 show a different embodiment of the invention, according to which a supporting equipment 118 is used to support a shaft 103 of an alternator 100, which may be operated in service, for example but not necessarily, by a gas turbine or by a steam turbine.

The supporting equipment 118 comprises a frame 120; fastening elements 121 for connecting frame 120 to the alternator turbine casing 102 close to a bearing coupling portion 110 of shaft 103); and an insert 124, which defines a supporting seat 125 for shaft 103 and is substantially made as the insert 24 described with reference to figures 2-5.

Frame 120 comprises a plate which can be frontally fixed to a bearing support of alternator 100 by the fastening elements 121, which in the embodiment described herein comprises screws passing through the frame 120 itself. Frame 120 supports insert 124 coaxially with respect to the shaft 103 of alternator 100 (which extends along an axis A'). The centring of insert 124 is obtained by centring wedges 127 and adjusting screws 129. In an embodiment, the adjusting screws 129 act against a basement 101 of alternator 100 and are symmetrically arranged with respect to the vertical median plane of shaft 103. The centring wedges 127 are arranged between frame 120 and basement 101.

As mentioned, insert 124 is shaped as a ring portion which extends along an arc of a circle in use about shaft 103. Tubs 130 (figure 8) arranged in sequence in the circumferential direction are obtained on a radially inner surface of the 124, which defines the supporting seat 125. A hydraulic circuit (not shown in detail) is integrated in insert 124, comprising a plurality of independent pipes for feeding a lubricant fluid separately to respective tubs 130.

For this purpose, the equipment 118 is provided with a lubricant feeding device 140, which comprises a tank 141, a pipe 142 and a distributor 143, connected to the hydraulic circuit pipes and to the tubs 130 through pipes 144.

Pump 142 draws lubricant at ambient pressure from tank 141 and supplies a flow of high pressure lubricant to distributor 143, which has a plurality of outlets 143a connected to respective ducts of the hydraulic circuit and is provided with adjusting valves 146 for adjusting the pressures to each outlet 143a independently.

The described equipment advantageously allows to support the shaft of a rotating machine of a plant for producing electric power in a rotational manner. In particular, the equipment allows the machine bearings to be removed without extracting the shaft from the turbine casing of the rotating machine. The shaft can be thus accessed with a tool, e.g. a turning tool or a belt grinding machine, and to machine and repair the surface of the bearing coupling portion directly in the machine. Since the equipment according to the invention avoids the need to extract the shaft from the turbine casing, the intervention time and machine downtime are drastically reduced, especially in the case of the gas turbines. Indeed, in this case, the fluid connections for feeding fuel are particularly complex, and the disassembly and reassembly operations require very long execution times. Instead, the equipment according to the invention allows to perform the repairs directly on the machine and therefore to achieve major savings.

Moreover, the described centring systems allows the frame and insert to be aligned to the shaft axis with very high accuracy, in practice eliminating possible oscillations during the rotation for machining (the oscillations may be restrained within one hundredth of a millimeter).

It is finally apparent that changes and variations can be made to the hydrostatic bearing and method described herein without departing from the scope of the present invention as defined in the appended claims.

## Claims

1. A supporting equipment for a shaft (3; 103) of a rotating machine (1; 100), comprising:
a frame (20; 120):
an insert (24; 124) connected to the frame (20; 120) and defining a supporting seat (25; 125) for supporting in rotary manner a portion of a shaft (3; 103) of a rotating machine (1; 100) of a plant for producing electric power, the insert (24; 124) having a hydraulic circuit (31) for feeding lubricating fluid to the supporting seat (25; 125), so as to form a hydrostatic bearing for the shaft (3; 103) housed in the supporting seat (25; 125); and
fastening elements (21; 121) for fixing the frame (20; 120) to a casing (2; 102) of the rotating machine (1; 100) with the supporting seat (25; 125) coaxial with the shaft;
wherein the insert (24; 124) is in the form of a ring portion;
**characterized in that** the frame (20; 120) is in the form of a ring portion, and supports the insert (24; 124) coaxially.

2. A supporting equipment as claimed in Claim 1, wherein the frame (20; 120) and the insert (24; 124) extend along respective arcs of a circle corresponding to angles of no more than 180°.

3. A supporting equipment as claimed in any one of the foregoing Claims, wherein the insert (24; 124) has a plurality of tubs (30; 130) which are open on a surface of the insert (24; 124) defining the supporting seat (25; 125): and the hydraulic circuit (31) comprises a plurality of conduits (32) for feeding lubricating fluid to respective tubs (30; 130).

4. A supporting equipment as claimed in Claim 2, wherein the tubs (30; 130) are arranged in succession circumferentially along the surface defining the supporting seat (25; 125).

5. A supporting equipment as claimed in Claim 3 or 4, wherein the conduits (32) have feed outlets (32b) at the bottom of respective tubs (30; 130).

6. A supporting equipment as claimed in any one of Claims 3 to 5, wherein the conduits (32) are independent of one another.

7. A supporting equipment as claimed in any one of Claims 3 to 6, comprising a pump (42; 142) and a distributor (43; 143) having an inlet connected to the pump (42; 142), and a plurality of delivery outlets (43a; 143a) connected to respective conduits (32) of the hydraulic circuit (31); wherein the distributor (43; 143) comprises regulating valves (46; 146) for regulating pressures at the delivery outlets (43a; 143a) independently.

8. A supporting equipment as claimed in any one of the foregoing Claims, comprising a plurality of centring wedges (27; 127) arranged around an outer surface of the frame (20; 120).

9. A supporting equipment as claimed in Claim 8, wherein the centring wedges (27) are connected to the frame (20) by respective adjusting screws.

10. A rotating machine (1; 100) for a plant for producing electric power, comprising a casing (2; 102), a shaft (3; 103) housed in the casing (2; 102) in a rotary manner, and a supporting equipment (18; 118) as claimed in any one of the foregoing Claims, fixed to the casing (2; 102) and supporting the shaft.

11. A machine as claimed in Claim 10, wherein the shaft (3; 103) has a bearing coupling portion (10; 110) and the insert (24; 124) supports the shaft (3; 103) in a region adjacent to the bearing coupling portion (10; 110).

12. A machine as claimed in Claim 10 or 11, wherein the hydraulic circuit (31) is supplied by a bearing lifting device (45).

## Patentansprüche

1. Stützvorrichtung für eine Welle (3; 103) einer Rotationsmaschine (1; 100), enthaltend:
einen Rahmen (20; 120);
einen mit dem Rahmen (20; 120) verbundenen Einsatz (24; 124), der einen Stützsitz (25; 125) zum drehbaren Stützen eines Teils einer Welle (3; 103) einer Rotationsmaschine (1; 100) einer Anlage zur Erzeugung von elektrischer Leistung bildet, welcher Einsatz (24; 124) einen Hydraulikkreislauf (31) zur Zufuhr von Schmierfluid zu dem Stützsitz (25; 125) hat, so dass ein hydrostatisches Lager für die in dem Stützsitz (25; 125) angeordnete Welle (3; 103) gebildet wird; und
Befestigungselemente (21; 121) zum Befestigen des Rahmens (20; 120) an einem Gehäuse (2; 102) der Rotationsmaschine (1; 100), wobei der Stützsitz (25; 125) koaxial zu der Welle ist;
wobei der Einsatz (24; 124) in Form eines Ringteils vorliegt;
**dadurch gekennzeichnet, dass** der Rahmen (20; 120) in Form eines Ringteils vorliegt und den Einsatz (24; 124) koaxial trägt.

2. Stützvorrichtung nach Anspruch 1, wobei der Rahmen (20; 120) und der Einsatz (24; 124) sich entlang jeweiliger Kreisbögen erstrecken, die Winkeln von nicht mehr als 180° entsprechen.

3. Stützvorrichtung nach einem der vorhergehenden Ansprüche, wobei der Einsatz (24; 124) mehrere Wannen (30; 130) aufweist, die sich auf einer Oberfläche des Einsatzes (24; 124) öffnen, welche den Stützsitz (25; 125) bildet; und der Hydraulikkreislauf (31) eine Vielzahl von Leitungen (32) zur Zufuhr von Schmierfluid zu den jeweiligen Wannen (30; 130) umfasst.

4. Stützvorrichtung nach Anspruch 2, wobei die Wannen (30; 130) aufeinanderfolgend über den Umfang entlang der den Stützsitz (25; 125) bildenden Oberfläche angeordnet sind.

5. Stützvorrichtung nach Anspruch 3 oder 4, wobei die Leitungen (32) Einspeisungsausgänge (32b) am Boden der jeweiligen Wannen (30; 130) haben.

6. Stützvorrichtung nach einem der Ansprüche 3 bis 5, wobei die Leitungen (32) voneinander unabhängig sind.

7. Stützvorrichtung nach einem der Ansprüche 3 bis 6, enthaltend eine Pumpe (42; 142) und einen Verteiler (43; 143), der einen mit der Pumpe (42; 142) verbundenen Einlass und eine Vielzahl von Abgabeausgängen (43a; 143a) hat, die mit den jeweiligen Leitungen (32) des Hydraulikkreislaufs (31) verbunden sind, wobei der Verteiler (43; 143) Regulierventile (46; 146) zum voneinander unabhängigen Regulieren des Drucks an den Abgabeausgängen (43a; 143a) hat.

8. Stützvorrichtung nach einem der vorhergehenden Ansprüche, enthaltend eine Vielzahl von Zentrierkeilen (27; 127), die um eine äußere Oberfläche des Rahmens (20; 120) angeordnet sind.

9. Stützvorrichtung nach Anspruch 8, wobei die Zentrierkeile (27) mit dem Rahmen (20) durch jeweilige Einstellschrauben verbunden sind.

10. Rotationsmaschine (1; 100) für eine Anlage zur Erzeugung von elektrischer Leistung, enthaltend ein Gehäuse (2; 102), eine in dem Gehäuse (2; 102) drehbar untergebrachte Welle (3; 103) und eine Stützvorrichtung (18; 118) nach einem der vorhergehenden Ansprüche, die an dem Gehäuse (2; 102) angebracht ist und die Welle stützt.

11. Maschine nach Anspruch 10, wobei die Welle (3; 103) ein Lageranschlussstück (10; 110) aufweist und der Einsatz (24; 124) die Welle (3; 103) in einem dem Lageranschlussstück (10; 110) benachbarten Bereich stützt.

12. Maschine nach Anspruch 10 oder 11, wobei der Hydraulikkreislauf (31) durch eine Lagerhubeinrichtung (45) versorgt wird.

## Revendications

1. Matériel de support d'un arbre (3 ; 103) d'une machine tournante (1 ; 100), comprenant :
un bâti (20 ; 120) ;
une pièce rapportée (24 ; 124) connectée au bâti (20 ; 120) et qui définit un siège de support (25 ; 125) destiné à supporter de manière rotative une partie d'un arbre (3 ; 103) d'une machine tournante (1 ; 100) d'une usine destiné à produire de l'électricité, la pièce rapportée (24 ; 124) présentant un circuit hydraulique (31) destiné à fournir un fluide de lubrification au siège de support (25 ; 125), de façon à former un roulement hydrostatique de l'arbre (3 ; 103) logé dans le siège de support (25 ; 125) ; et
des éléments de fixation (21 ; 121) destinés à fixer le bâti (20 ; 120) sur une enveloppe (2 ; 102) de la machine tournante (1 ; 100), le siège de support (25 ; 125) étant coaxial avec l'arbre ;
dans lequel la pièce rapportée (24 ; 124) se présente sous la forme d'une partie d'anneau ;
**caractérisé en ce que** le bâti (20 ; 120) se présente sous la forme d'une partie d'anneau, et supporte la pièce rapportée (24 ; 124) de manière coaxiale.

2. Matériel de support selon la revendication 1, dans lequel le bâti (20 ; 120) et la pièce rapportée (24 ; 124) s'étendent le long d'arcs de cercle respectifs qui correspondent à des angles qui ne sont pas supérieurs à 180°.

3. Matériel de support selon l'une quelconque des revendications précédentes, dans lequel la pièce rapportée (24 ; 124) présente une pluralité de baquets (30 ; 130) qui sont ouverts sur une surface de la pièce rapportée (24 ; 124) qui définit le siège de support (25; 125) ; et le circuit hydraulique (31) comprend une pluralité de conduits (32) destinés à fournir un fluide de lubrification aux baquets respectifs (30 ; 130).

4. Matériel de support selon la revendication 2, dans lequel les baquets (30 ; 130) sont agencés à la suite de manière circonférentielle le long de la surface qui définit le siège de support (25 ; 125).

5. Matériel de support selon la revendication 3 ou la revendication 4, dans lequel les conduits (32) présentent des sorties d'alimentation (32b) au niveau du fond des baquets respectifs (30 ; 130).

6. Matériel de support selon l'une quelconque des revendications 3 à 5, dans lequel les conduits (32) sont indépendants les uns des autres.

7. Matériel de support selon l'une quelconque des revendications 3 à 6, comprenant une pompe (42 ; 142) et un dispositif de distribution (43 ; 143) qui présente une entrée connectée à la pompe (42 ; 142), et une pluralité de sorties d'approvisionnement (43a; 143a) connectées aux conduits respectifs (32) du circuit hydraulique (31) ; dans lequel le dispositif de distribution (43 ; 143) comprend des soupapes de régulation (46 ; 146) destinées à réguler de manière indépendante les pressions au niveau des sorties d'approvisionnement (43a ; 143a).

8. Matériel de support selon l'une quelconque des revendications précédentes, comprenant une pluralité de coins de centrage (27 ; 127) agencés autour de la surface extérieure du bâti (20 ; 120).

9. Matériel de support selon la revendication 8, dans lequel les coins de centrage (27) sont connectés au bâti (20) par des vis de réglage respectives.

10. Machine tournante (1 ; 100) d'une usine destinée à produire de l'électricité, comprenant une enveloppe (2 ; 102), un arbre (3 ; 103) logé dans l'enveloppe (2 ; 102) de manière rotative, et un matériel de support (18 ; 118) selon l'une quelconque des revendications précédentes, fixé sur l'enveloppe (2 ; 102) et qui supporte l'arbre.

11. Machine selon la revendication 10, dans laquelle l'arbre (3 ; 103) présente une partie accouplement de roulement (10 ; 110) et la pièce rapportée (24 ; 124) supporte l'arbre (3 ; 103) dans une région adjacente à la partie accouplement de roulement (10 ; 110).

12. Machine selon la revendication 10 ou la revendication 11, dans laquelle le circuit hydraulique (31) est alimenté par un dispositif de levage de roulement (45).
